# EUROPÄISCHE PATENTSCHRIFT

(11) **EP 2 848 960 B1**
(45) Veröffentlichungstag und Bekanntmachung des Hinweises auf die Patenterteilung: **02.12.2015**
(21) Anmeldenummer: 13183878.1
(22) Anmeldetag: 11.09.2013
(51) Int. Cl.: G01S 7/481

(54) **Verfahren und optoelektronischer Sensor zur Bestimmung der Anwesenheit eines Objekts**
Method and optoelectronic sensor for determining the presence of an object
Procédé et capteur optoélectronique destinés à la détermination de la présence d'un objet

(43) Veröffentlichungstag der Anmeldung: 18.03.2015
(73) Patentinhaber: SICK AG, 79183 Waldkirch/Breisgau (DE)
(72) Erfinder: Waslowski, Kai, 79312 Emmendingen (DE)
(74) Vertreter: Manitz, Finsterwald & Partner GbR

(56) Entgegenhaltungen:
- EP-A1- 1 816 488
- EP-A1- 2 159 603
- DE-A1- 10 318 764
- DE-A1- 19 808 215
- US-A1- 2010 201 276

## Beschreibung

Die Erfindung betrifft ein Verfahren und einen optoelektronischen Sensor zur Bestimmung der Anwesenheit eines Objektes in einem Überwachungsraum oder einem Teil eines Überwachungsraumes.

Bei bekannten nach dem Triangulationsprinzip arbeitenden Verfahren werden Lichtpulse einer Sendelichtquelle in Richtung eines Überwachungsraums gesendet. Ein gegebenenfalls im Lichtweg befindliches Objekt reflektiert oder remittiert solches Licht, das durch eine Empfängeroptik auf eine Empfängerelementeanordnung abgebildet wird. Die Position des reflektierten und/oder remittierten Lichtflecks auf dem Empfänger ist von dem Abstand zwischen dem Sensor und dem Objekt abhängig, so dass auf die Anwesenheit oder Abwesenheit eines Objekts in einem Überwachungsraum oder einem zu überwachenden Teil eines Überwachungsraumes geschlossen werden kann. Dabei wird zum Beispiel der Raum zwischen dem Sensor und einer ausgewählten Tastweite überwacht.

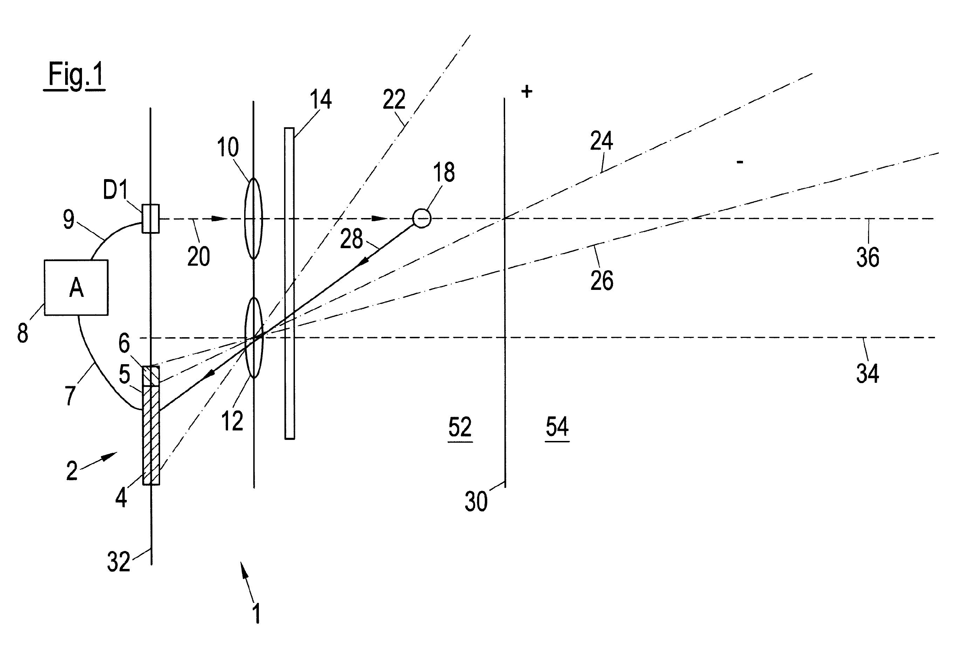

Ein solcher auch als Triangulationslichttaster bezeichneter Sensor und ein damit durchgeführtes Verfahren sind in Fig. 1 dargestellt.

Die Sensoranordnung selbst ist mit dem Bezugszeichen 1 bezeichnet. Eine Diode D 1 sendet das Sendelicht 20 in den Überwachungsraum, der sich hier in einen Nahbereich 52 und einen Fernbereich 54 aufteilt. Die Grenze stellt die so genannte Tastweite 30 dar.

Eine mögliche Hauptanwendung einer solchen Anordnung ist die Detektion der Anwesenheit von Gegenständen im Nahbereich 52. Zum Beispiel kann es sich dabei um Gepäckstücke auf einem Förderband handeln, die an dem Detektor 1 vorbeigeführt werden und deren Anwesenheit festgestellt werden soll. Eine andere Anwendung ist zum Beispiel die Detektion, ob sich ein Gegenstand in einem Regal befindet, um einen Lagerbestand zu prüfen. In solchen Anwendungsfällen soll ein Anwesenheitssignal ausgegeben werden, wenn ein entsprechender Gegenstand die Sendelichtachse 36 im Nahbereich 52 kreuzt und insofern im Nahbereich 52 von den Sendelichtpulsen 20 getroffen wird.

In diesem Fall werden Objekte also in Bezug zum Sensor immer an im Wesentlichen derselben Stelle (zum Beispiel auf dem beobachteten Förderband) erwartet, so dass die Sendelichtachse 36 in diese Richtung gewählt wird.

Die Tastweite 30 kann mit Hilfe der Ausgestaltung der Empfängerelementeanordnung 2 festgelegt werden. Die Empfängerelementeanordnung umfasst zum Beispiel eine Reihe von Fotodioden, von denen eine erste Anzahl einem Nahbereichsteil 4 der Empfängerelementeanordnung 2 zugeordnet ist, und ein anderer Teil ein Fernbereichsteil 6 der Empfängerelementeanordnung zugeordnet ist. Die Grenze zwischen Nah- und Fernbereichsteil ist mit Bezugsziffer 5 bezeichnet. Wird zum Beispiel ein Objekt 18, das im Nahbereich 52 ist, von Sendelichtpulsen 20 getroffen, die durch eine Sendeoptik 10 in Richtung des Überwachungsraums gesendet werden, so reflektiert das Objekt 18 Licht 28. Dieses wird durch die Empfängeroptik 12 auf die Empfängerelementeanordnung 2 abgebildet.

Die Sendelichtpulse 20 werden dazu entlang der Sendeachse 36 ausgesendet. Bezugszeichen 34 bezeichnet die Empfängerachse. Die Sendelichtdiode D 1 und die Empfängerelementeanordnung 2 befinden sich in einer Ebene 32. Eine Auswerteeinrichtung 8 ist über Signal- bzw. Steuerleitungen 7, 9 mit der Empfängerelementeanordnung 2 bzw. der Sendediode D 1 verbunden, um die Signale der Empfängerelementeanordnung 2 aufzunehmen und auszuwerten bzw. die Aussendung der Pulse durch die Sendelichtdiode D 1 anzusteuern. Die Sendeoptik 10 und die Empfangsoptik 12 stellen zudem entsprechende Sende- bzw. Empfangsaperturen dar und umfassen in der Regel z.B. jeweils eine Linse.

Man sieht, dass das im Nahbereich 52 angeordnete Objekt 18 das Licht in Richtung des Nahbereichsteils 4 der Empfängerelementeanordnung 2 reflektiert.

Im einfachsten Anwendungsfall werden die Signale des Fernbereichsteils 6 nicht berücksichtigt, so dass Licht aus dem Fernbereich 54 ausgeblendet wird ("Hintergrundausblendung").

Eine Auswertung der Differenz der Signale von Nah- und Fernbereich gibt aber eine sehr viel genauere Information über die Anwesenheit und/oder Lage eines Objekts, insbesondere wenn sich ein Lichtpunkt über die Grenze 5 zwischen Nahbereichsteil 4 und Fernbereichsteil 6 der Empfängerelementeanordnung 2 erstreckt, also ein Objekt 18 sich in unmittelbarer Nähe oder direkt an der Tastweite 30 befindet.

In Fig. 1 sind Bereichsgrenzen 22 und 24 eingezeichnet. Licht, das aus dem Bereich zwischen diesen Bereichsgrenzen 22, 24 aus dem Nahbereich 52 in Richtung der Empfängerelementeanordnung 2 abgebildet wird, trifft auf den Nahbereichsteil 4 der Empfängerelementeanordnung 2. Dementsprechende Signale werden in der Auswerteeinrichtung 8 mit positivem Vorzeichen versehen. Andererseits trifft Licht, das aus dem Bereich zwischen den Bereichsgrenzen 24 und 26 auf die Empfängerelementeanordnung 2 trifft, auf den Fernbereichsteil 6. Entsprechende Signale werden mit negativem Vorzeichen bewertet. Entsprechend sind in Fig. 1 diese Bereiche mit "+" bzw. "-" bezeichnet.

Man erkennt, dass die auf diese Weise ausgewählte Tastweite 30 den Raum außerhalb des Sensors 1 in einen Nahbereich 52 und einen Fernbereich 54 aufteilt. Die Lage der Tastweite 30 lässt sich einstellen, indem die Empfängerelementeanordnung 2 unterschiedlich zwischen dem Nahbereichsteil und dem Fernbereichsteil 6 aufgeteilt wird. Dies kann einfach dadurch geschehen, dass den Signalen der entsprechenden Dioden von der Auswerteeinrichtung 8 das entsprechende Vorzeichen "+" oder "-" zugeordnet wird, so dass die Grenze 5 zwischen Nahbereichsteil 4 und Fernbereichsteil 6 angepasst wird und sich insofern der Schnittpunkt der Bereichsgrenze 24 und der Sendeachse 36 verschiebt, der die Lage der Tastweite 30 bestimmt.

Der optische Sensor und insbesondere die Sendediode D 1, die Auswerteeinrichtung 8, die Empfängerelementeanordnung 2, die Empfangsoptik 12 und die Sendeoptik 10 befinden sich in einem in Fig. 1 nicht dargestellten Gehäuse, das nach vorne über eine transparente Frontscheibe 14 abgeschlossen sein kann.

Die Auswerteeinrichtung 8 übernimmt auch die Bewertung der Signale des Nahbereichsteils 4 mit einem positiven Vorzeichen und die Bewertung der Signale des Fernbereichsteils 6 der Empfängerelementeanordnung 2 mit negativem Vorzeichen. Die Signale aller Empfangselemente der Empfängerelementeanordnung 2 werden nach dieser Bewertung addiert und mit einem Schwellwert verglichen. Bei dem gezeigten Beispiel entspricht ein positives Signal der Anwesenheit eines Objekts 18 im Nahbereich 52 und ein negatives Signal der Anwesenheit eines Objekts im Fernbereich 54.

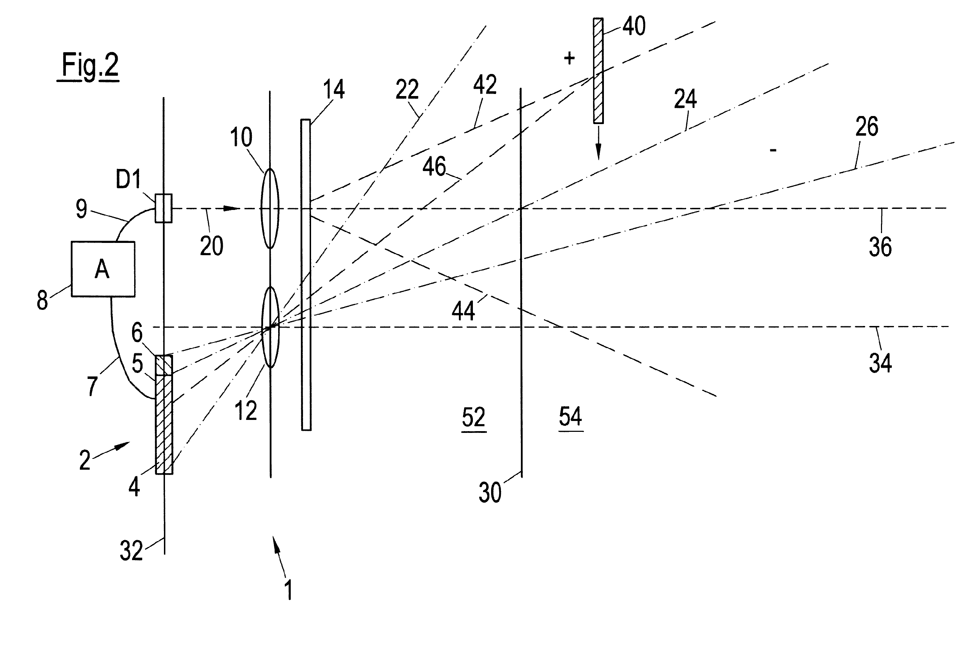

Das anhand der Fig. 1 geschilderte Verfahren stellt einen Idealfall dar. Tatsächlich ist es jedoch nicht ausgeschlossen oder sogar die Regel, dass die Sendelichtpulse 20 aufgeweitet werden, zum Beispiel an einer verschmutzten Frontscheibe 14. Es entsteht ein Lichtkegel, der in Fig. 2 durch die Begrenzungslinien 42 und 44 dargestellt ist und innerhalb dessen diffuses Licht auch außerhalb der Sendeachse 36 vorliegt. Befindet sich jetzt zum Beispiel im Fernbereich 54 ein reflektierendes Objekt 40, zum Beispiel eine reflektierende Warnweste eines Bedieners, so wird dieser Reflektor 40 Licht aus dem diffusen Lichtkegel auch in Richtung 46 zurück reflektieren, wobei solches Licht dann auf den Nahbereichsteil 4 der Empfängerelementeanordnung 2 fällt. Obwohl sich im Nahbereich 52 also beim in Fig. 2 gezeigten Beispiel kein Objekt befindet, trifft Licht auf den Nahbereichsteil 4 der Empfängerelementeanordnung 2 und wird fälschlicherweise als von einem im Nahbereich 52 befindlichen Objekt stammend identifiziert.

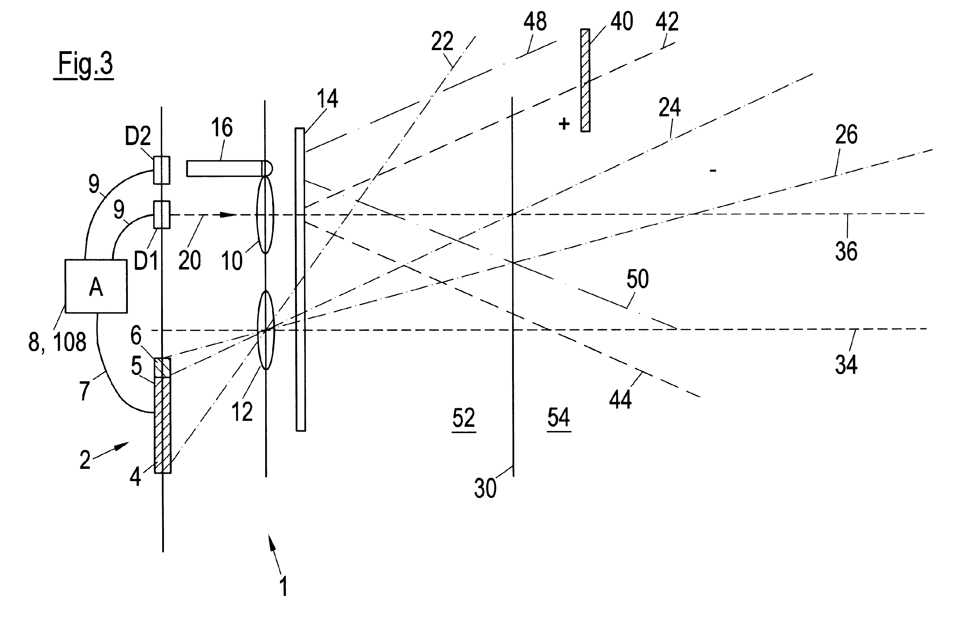

Um derartige Fehler zu vermeiden, wird bei bekannten Verfahren bzw. Sensoren eine Anordnung entsprechend der Fig. 3 eingesetzt. Zusätzlich zu der ersten Sendelichtdiode D 1 wird eine zweite Leuchtdiode D2 zum Einsatz gebracht, die zur Aussendung von diffusem Licht ausgestaltet ist und insofern hier auch als Diffuslichtdiode D2 bezeichnet wird. Dies wird bei dem in Fig. 3 gezeigten Beispiel durch die Verwendung eines Lichtleiters 16 erreicht. Die gesamte Anordnung bestehend aus Diffuslichtdiode D2 und dem Lichtleiter 16 wird im Folgenden als Diffuslichtquelle bezeichnet. Das Licht dieser Diffuslichtquelle erzeugt einen Lichtkegel, der in Fig. 3 durch die Begrenzungslinien 48 und 50 dargestellt ist.

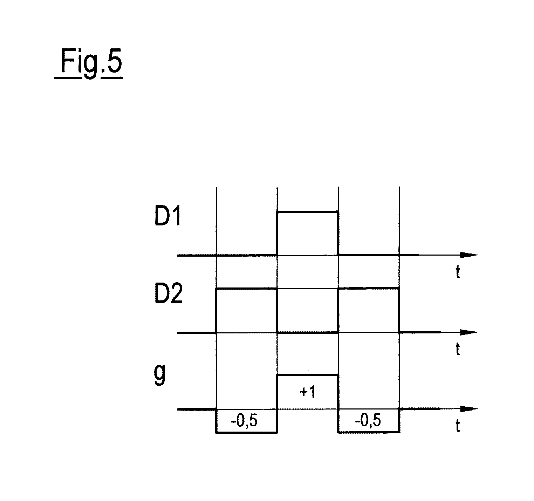

Die Auswerteeinrichtung 8 steuert die Sendelichtdiode D 1 und die Diffuslichtdiode D2 alternierend an. Signale, die von der Empfängerelementeanordnung 2 empfangen werden, werden - bevor sie addiert werden - während der Aussendung von Sendelichtpulsen 20 durch die Sendelichtdiode D 1 zum Beispiel mit einem positiven Gewichtungsfaktor multipliziert und Signale, die während der Aussendung von Sendelichtpulsen durch die Diffuslichtdiode D2 empfangen werden, mit einem negativen Vorzeichen. Befindet sich ein Reflektor 40 an der dargestellten Position, so reflektiert dieser Reflektor 40 auch während der Sendelichtpulse, die von der Diffuslichtdiode D2 ausgesendet werden, Licht in Richtung der Empfängerelementeanordnung 2. Dieses Licht ist aber als von einem Störobjekt stammend identifizierbar, da es während eines Sendelichtpulses der Diffuslichtdiode D2 auf die Empfängerelementeanordnung trifft. Durch die entsprechende Gewichtung und Addition der Signale, die während Aussendung der Sendelichtpulse der Sendelichtdiode D 1 und der Diffuslichtdiode D2 aufgenommen werden, kann der Einfluss des Störlichtes des Objektes 40 also eliminiert werden. Dabei werden zum Beispiel diejenigen Signale gewichtet und addiert, die während eines Abtastzyklus gemessen werden, wie es zum Beispiel in Fig. 5 gezeigt und weiter unten erläutert wird.

Befindet sich andererseits ein Objekt im Nahbereich 52 (wie das Objekt 18 in Fig. 1), so wird es von den Sendelichtpulsen 20 der Sendelichtdiode D1 getroffen. Die reflektierte Intensität ist dann so hoch, dass das Licht der Diffuslichtquelle keinen Fehler der Messung bewirken kann.

Die Lichtintensitäten der Sendelichtdiode D1 und der Diffuslichtdiode D2 werden dazu so gewählt, dass bei Anwesenheit eines Objekts 18 im Nahbereich 52 das Reflexionssignal an der Empfängerelementeanordnung 2 so groß ist, dass möglicherweise auftretende Streulichtreflexionen sowohl der Sendelichtdiode D 1 als auch der Diffuslichtdiode D2 vernachlässigt werden können. Vorteilhafterweise wird die Lichtintensität der Diffuslichtdiode D2 in einer Größenordnung gewählt, die dem gegebenenfalls zu erwartenden Streulicht der Sendelichtdiode D 1 an der Frontscheibe 14 entspricht, so dass die Kompensation einer Reflexion, die auf das Streulicht des Sendelichtdiode D 1 zurückgeht, durch eine Reflexion, die auf Licht der Diffuslichtdiode D2 zurückgeht, möglichst optimal ist.

Eine entsprechende Anordnung ist zum Beispiel in EP 1 211 478 B1 beschrieben.

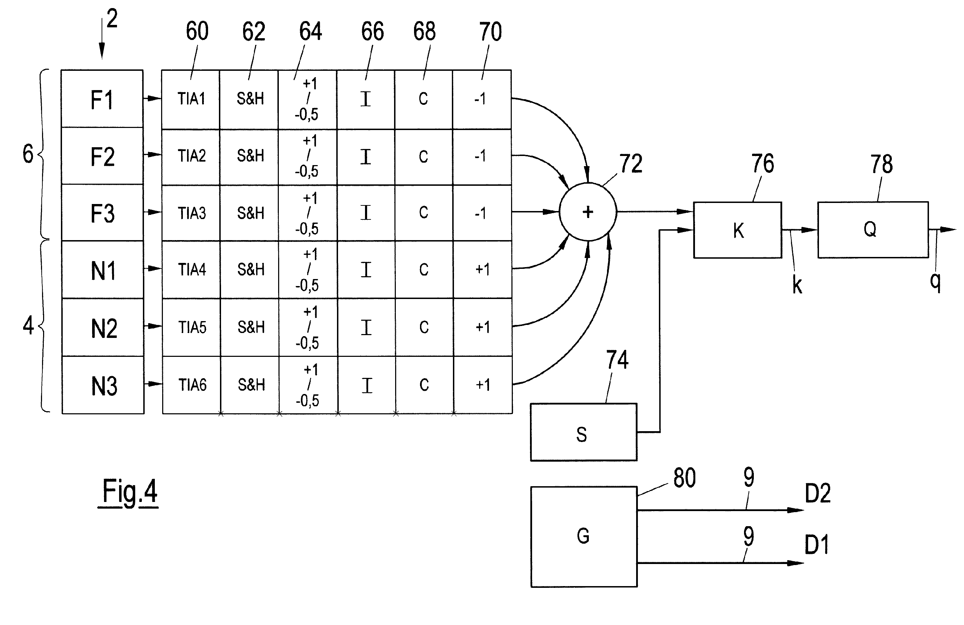

Eine wie oben beschriebenen Anordnung des Standes der Technik kann bei der Durchführung eines Verfahrens eingesetzt werden, das anhand der Fig. 4 erläutert wird.

Gezeigt ist hier schematisch die Empfängerelementeanordnung 2 mit bei diesem Beispiel angedeuteten drei Nahbereichsfotodioden N1, N2, N3, die den Nahbereichsteil 4 der Empfängerelementeanordnung 2 bilden. In diesem Beispiel drei Fernbereichsdioden F1, F2, F3 bilden den Fernbereichsteil 6 der Empfängerelementeanordnung 2. Die Signale der einzelnen Empfängerdioden werden mit Hilfe von Transimpedanzverstärkern TIA1 bis TIA6 verstärkt, von denen hier der Übersichtlichkeit halber nur einer mit der Bezugsziffer 60 versehen ist. Die verstärkten Signale werden jeweils in einer Abtaststufe ("Sample & Hold"-Stufe, S&H-Stufe) abgetastet, von denen hier der Übersichtlichkeit halber ebenfalls nur eine mit der Bezugsziffer 62 versehen ist.

64 bezeichnet Gewichtungseinheiten, zum Beispiel FIR-Filter (Finite Impulse Response-Filter), in denen die abgetasteten Signale gewichtet werden. Die Gewichtung geschieht bei bekannten Verfahren auf folgende Weise. Mit einem Signalgenerator 80 ("G") werden die erste Sendelichtdiode D 1 und die Diffuslichtdiode D2 über Steuerleitungen 9 angesteuert und zwar in einer Weise, dass sie alternierend leuchten. Dies ist in Fig. 5 für einen beispielhaften Abtastzyklus dargestellt. Die von den Fotodioden der Empfängerelementeanordnung 2 daraufhin erzeugten Signale werden über eine Signalleitung 7 an eine Auswerteeinrichtung 8 (Fig. 3) zur Auswertung weitergeleitet, die in Fig. 3 durch den Buchstaben "A" angedeutet ist. Während dieser Auswertung werden die von den Sample & Hold-Stufen 62 abgetasteten Signale in den Gewichtungseinheiten 64 jeweils mit Gewichtungsfaktoren g (Fig. 5) gewichtet. Während die Diffuslichtdiode D2 einen Lichtpuls aussendet, wird der Gewichtungsfaktor g zum Beispiel gleich - 0, 5 verwendet, während bei leuchtender Sendelichtdiode D 1 zum Beispiel der Gewichtungsfaktor + 1 verwendet wird. Auf diese Weise werden für jeden einzelnen Kanal die Signale abhängig von der eingeschalteten Lichtdiode gewichtet.

Die gewichteten Signale werden wiederum für jeden einzelnen Kanal den Integratoren 66 zugeführt, deren Ausgangssignale in einer entsprechenden Anzahl von Clipping-Stufen 68 zugeleitet wird. Hier werden negative Anteile abgeschnitten. Schließlich werden die Signale für jeden einzelnen Kanal in Abhängigkeit davon, ob es sich um einen Kanal des Fernbereichsteils 6 oder den Kanal des Nahbereichsteils 4 handelt, mit einem Faktor + 1 bzw. -1 multipliziert, was durch die Multiplikationsstufen 70 angedeutet ist. Dieser Multiplikationsschritt für die einzelnen Kanäle entspricht der Bewertung der Signale, die aus dem in Fig. 1 bis 3 gezeigten Bereich zwischen den Bereichsgrenzen 22 und 24 kommen, mit positivem Vorzeichen ("+"), bzw. der Bewertung von Signalen aus dem Bereich zwischen den Bereichsgrenzen 24 und 26 mit negativem Vorzeichen ("-").

Die Verstärkung, die Abtastung, die Gewichtung, die Integration, das "Clipping" und die Multiplikation finden für jeden einzelnen Kanal gesondert statt, wie es in Fig. 4 dargestellt ist. Die Ergebnisse dieser Auswerteschritte werden in einem Addierer 72 addiert. Dabei ist durch den Multiplikationsschritt in den Multiplikatoren 70 sichergestellt, dass Lichtpunkte, die auf den Nahbereichsteil 4 der Empfängerelementeanordnung 2 fallen, positiv gewertet werden und Lichtsignale, die auf Dioden des Fernbereichsteils 6 der Empfängerelementeanordnung 2 fallen, negativ gewertet werden. Das Ergebnis des Summationsschritts 72 wird in einem Komparator 76 ("K") mit einem Schwellwert verglichen, der von einem Schwellwertgenerator 74 ("S") geliefert wird.

Das Ergebnis k dieses Vergleichs wird einer Mehrbitverarbeitung in der Mehrbitverarbeitungseinheit 78 ("Q") unterzogen. Das resultierende Signal q gibt dann Information über die Anwesenheit eines Objekts im Nahbereich 52.

Dieses bekannte Verfahren stellt sicher, dass ein eigentlich außerhalb des Nahbereichs 52 befindlicher Reflektor 40 nicht aufgrund der Aufweitung der Sendelichtpulse 20 an der Frontscheibe 14 zu einem falschen Signal führt, das als Anwesenheit eines Objekts im Nahbereich 52 interpretiert werden würde.

Insbesondere die Auswerteschritte 60 bis 78 und die von der Signalerzeugungseinrichtung 80 durchgeführten Steuerungsschritte werden bei der gezeigten Ausgestaltung der Fig. 4 in der Auswerteeinrichtung 8 (Fig. 3) vorgenommen, die entsprechend ausgestaltet bzw. programmiert ist.

Das beschriebene Verfahren des Standes der Technik erfordert die Auswertung in den Verstärkern 60, die Abtastung in den Abtaststufen 62, die Gewichtung in den Gewichtungsstufen 64, die Integration in den Integratoren 66, das Abschneiden der negativen Anteile in den Clipping-Stufen 68 und die Multiplikation in den Multiplikationsstufen 70 für jeden einzelnen der Kanäle (im Beispiel der Fig. 4 sechs Kanäle).

Weiterer Stand der Technik ist in DE 103 18 764 A1 beschrieben.

Aufgabe der vorliegenden Erfindung ist es, den Einfluss des Streulichts zum Beispiel einer verschmutzten Frontscheibe zu vermindern bzw. zu eliminieren, ohne dass eine derartige weitgehend mehrkanalige Ausführung der Empfängerschaltung notwendig ist.

Diese Aufgabe wird mit einem Verfahren zur Bestimmung der Anwesenheit eines Objekts in einem Überwachungsraum bzw. einem zu überwachenden Teil eines Überwachungsraumes mit den Merkmalen des Anspruchs 1 bzw. einen optoelektronischen Sensor mit den Merkmalen des Anspruch 7 gelöst.

Insbesondere zeichnet sich das erfindungsgemäße Verfahren dadurch aus, dass erst das in dem Additionsschritt summierte Signal abgetastet wird und dieses dabei entstehende Abtastsignal dem Gewichtungsschritt unterzogen wird, indem es in Abhängigkeit davon, welche der Sendelichtquellen (also der Sendelichtquelle oder der Diffuslichtquelle) gerade einen Lichtpuls aussendet, mit einem entsprechenden Faktor gewichtet wird. Das gewichtete Signal wird dann mit einem Schwellwert verglichen und einer Mehrbitverarbeitung mit einer Mehrbittiefe N von wenigstens zwei zugeführt. Das Ergebnis des Schwellwertvergleichs wird auch auf andere Weise verwendet. Und zwar wird erfindungsgemäß die Änderung einer Beziehung zwischen dem Ergebnis des Schwellwertvergleichs (Vergleichsergebnissignal) und dem Ergebnis der Mehrbitverarbeitung (Anwesenheitssignal) eingesetzt, um den Betriebszustand der Diffuslichtquelle festzulegen. Der Betriebszustand wird geändert, wenn sich das Anwesenheitssignal nach der Mehrbitverarbeitung von dem Vergleichsergebnissignal des Schwellwertvergleiches unterscheidet.

Die Sendelichtquellen können zum Beispiel Leuchtdioden sein. Der Begriff "Licht" wird hier für elektromagnetische Strahlung unterschiedlicher Wellenlängen eingesetzt, also zum Beispiel für sichtbares Licht, infrarotes Licht oder ultraviolettes Licht. Die Empfängerelemente können zum Beispiel durch Fotodioden gebildet sein.

Während eines stabilen Betriebs ohne jegliche unerwünschte oder unerwartete Störungen ist das Ergebnis des Schwellwertvergleichs über mehrere Abtastzyklen konstant. Ändert sich jedoch das Ergebnis des Schwellwertvergleichs (wenn zum Beispiel ein Reflektor 40 in die in Fig. 2 oder 3 dargestellte Position gelangt), so wird sich von einem Abtastzyklus auf denn nächsten Abtastzyklus das Ergebnis des Schwellwertvergleichs (Vergleichsergebnissignal) ändern.

Das Vergleichsergebnissignal wird der Mehrbitverarbeitung als in der Regel binäres Eingangssignal zugeführt. Das in der Regel binäre Ausgangssignal der Mehrbitverarbeitung folgt dem Eingangssignal aber nicht grundsätzlich sofort. Wenn sich das Vergleichsergebnissignal, das in der Mehrbitverarbeitung zugeführt wird, ändert, so wird erst dann eine Änderung des binären Ausgangssignales der Mehrbitverarbeitung und damit des Anwesenheitssignales bewirkt, wenn nach einer Anzahl von Abtastzyklen, die der gewählten Mehrbittiefe N entspricht, noch immer das abweichende Vergleichsergebnissignal anliegt. Wenn sich das Anwesenheitssignal nach der Mehrbitverarbeitung von dem aktuellen Vergleichsergebnissignal des Schwellwertvergleiches unterscheidet, wird der Betriebszustand der Diffuslichtquelle geändert. Die Mehrbittiefe N ist dabei wenigstens zwei, bevorzugt größer als zwei, zum Beispiel einhundert.

Insofern kann die Mehrbitverarbeitung die Filterung von binären Signalen mindestens zweier, bevorzugt wenigstens dreier Abtastzyklen umfassen. Aber auch größere Anzahlen, z.B. 100, sind sinnvoll möglich.

Mit dem erfindungsgemäßen Verfahren und einem entsprechend ausgestalteten erfindungsgemäßen optoelektronischen Sensor ist es möglich, eine mehrkanalige Verarbeitung zu vermeiden bzw. die mehrkanalige Verarbeitung auf wenige Schritte zu begrenzen. Insbesondere, weil die Abtaststufe erst nach dem Addieren der verstärkten und multiplizierten Signale zum Einsatz kommt, ist nur eine Abtaststufe notwendig. Auch ist nur eine Gewichtungsstufe notwendig, die auf das Abtastsignal wirkt.

Die erfindungsgemäße Änderung des Betriebszustands der zweiten Sendelichtquelle umfasst zum Beispiel das Ausschalten aus einem zugeschalteten Zustand oder das Zuschalten aus einem ausgeschalteten Zustand. Dabei ist ein ausgeschalteter Zustand ein solcher Zustand, in dem die zweite Sendelichtquelle während eines gesamten Abtastzyklus immer aus ist, also gar nicht verwendet wird. Ein zugeschalteter Zustand ist hingegen ein Zustand, in dem die zweite Lichtquelle zusätzlich zur ersten Sendelichtquelle verwendet wird, also auch zur Aussendung von Lichtpulsen angesteuert wird, wobei diese Lichtpulse nicht gleichzeitig mit den Lichtpulsen der ersten Sendelichtquelle ausgesendet werden, vorzugsweise alternierend dazu.

Ist also bei dem oben beschriebenen Beispiel zunächst kein störender Reflektor im Fernbereich vorhanden, so wird die bei dessen Eintreten in den durch den diffusen Lichtkegel beleuchteten Bereich bewirkte Signaländerung selbst eingesetzt, um die Diffuslichtdiode zuzuschalten. Grundsätzlich ist das erfindungsgemäße Verfahren vorteilhaft bereits mit nur zwei Kanälen einsetzbar. Ein Kanal dieser zwei Kanäle umfasst dabei die aufsummierten Signale der Empfängerelemente des Fernbereichsteils der Empfängerelementeanordnung, während der andere Kanal die aufsummierten Signale der Empfängerelemente des Nahbereichsteils der Empfängerelementeanordnung umfasst. Die zweikanalige Bearbeitung beschränkt sich dabei auf die Verstärkung dieser aufsummierten Signale und die Multiplikation mit einem ersten Gewichtungsfaktor (z.B. + 1) für das aufsummierte Summensignal der Empfängerelemente des Nahbereichsteils der Empfängerelementeanordnung bzw. die Multiplikation mit einem zweiten Gewichtungsfaktor (z.B. -1) für das aufsummierte Signal der Signale des Fernbereichsteils der Empfängerelementeanordnung vor der Addition der beiden Kanäle. Ab hier ist nur noch eine einkanalige Weiterverarbeitung nötig.

Der Gewichtungsfaktor, mit dem das Abtastsignal in Abhängigkeit davon gewichtet wird, ob ein Sendelichtpuls der ersten Sendelichtquelle oder ein Sendelichtpuls der Diffuslichtquelle ausgesendet wird, werden vorteilhafterweise derart ausgewählt, dass die Summe der Gewichtungsfaktoren während eines Abtastzyklus gleich Null ist. Insbesondere wird zum Beispiel der Gewichtungsfaktor, der bei einem Sendelichtpuls der ersten Sendelichtquelle zum Einsatz kommt, positiv, insbesondere zu +1, gewählt, während der Gewichtungsfaktor, der bei einem Sendelichtpuls der Diffuslichtquelle zum Einsatz kommt, negativ gewählt, insbesondere zu -0,5. In einem solchen Fall besteht ein Abtastzyklus aus einem Zeitraum, der der Aussendung eines Sendelichtpulses der ersten Sendelichtquelle und zwei Sendelichtpulsen der zweiten Sendelichtquelle (Diffuslichtquelle) entspricht.

Die Erfindung betrifft außerdem einen optoelektronischen Sensor mit den Merkmalen des Anspruchs 7.

Insbesondere ist bei einem erfindungsgemäßen optoelektronischen Sensor die Abtasteinheit zur Signalabtastung funktionell zwischen der Additionseinheit und der Gewichtungseinheit angeordnet. Bei dem erfindungsgemäßen optoelektronischen Sensor werden also zunächst die summierten Signale der Empfängerelemente des Fernbereichsteils der Empfängerelementeanordnung und die summierten Signale der Empfängerelemente des Nahbereichsteils der Empfängerelementeanordnung addiert und dann erst abgetastet. Das resultierende Abtastsignal wird der Gewichtungseinheit zugeführt, wo eine Multiplikation mit den Gewichtungsfaktoren in Abhängigkeit davon geschieht, ob gerade ein Sendelichtpuls von der ersten Sendelichtquelle oder von der Diffuslichtquelle ausgesendet wird.

Der erfindungsgemäße optoelektronische Sensor zeichnet sich außerdem dadurch aus, dass die Gewichtungseinheit zwischen der Abtasteinheit und der Vergleichseinheit angeordnet ist, die den Schwellwertvergleich durchführt.

Schließlich umfasst der erfindungsgemäße optoelektronische Sensor eine Umschalteinheit, die den Betriebszustand der Diffuslichtquelle ändert, wenn sich die Beziehung zwischen dem Ausgangssignal der Mehrbitverarbeitungseinheit und dem Signal der Schwellwertvergleichseinheit ändert.

Die Funktionsweise des erfindungsgemäßen optoelektronischen Sensors und seine Vorteile ergeben sich aus der obigen Schilderung des erfindungsgemäßen Verfahrens. Besondere Ausgestaltungen des erfindungsgemäßen optoelektronischen Sensors ergeben sich in analoger Weise aus den besonderen Ausgestaltungen des erfindungsgemäßen Verfahrens.

Insofern umfassen besondere Ausführungsformen des erfindungsgemäßen optoelektronischen Sensors solche Ausführungsformen, die zur Ausführung des erfindungsgemäßen Verfahrens und dessen besonderer Ausgestaltungen ausgebildet ist.

Die Erfindung wird anhand der beiliegenden Figuren im Detail erläutert. Dabei zeigen
- Fig. 1: eine schematische Darstellung eines Triangulationstasters zur Erläuterung des Messprinzips,
- Fig. 2: einen Triangulationstaster unter Einwirkung einer verschmutzten Frontscheibe,
- Fig. 3: einen Triangulationstaster mit einer zusätzlichen Diffuslichtquelle,
- Fig. 4: ein bekanntes Auswertungsprinzip für einen Triangulationstaster der Fig. 3,
- Fig. 5: eine Graphik zur Darstellung der Sendepulse der zwei Sendelichtquellen der Fig. 3 und verwendeter Gewichtungsfaktoren während eines Abtastzyklus, und
- Fig. 6: eine schematische Darstellung einer Ausgestaltung des erfindungsgemäßen Verfahrens.

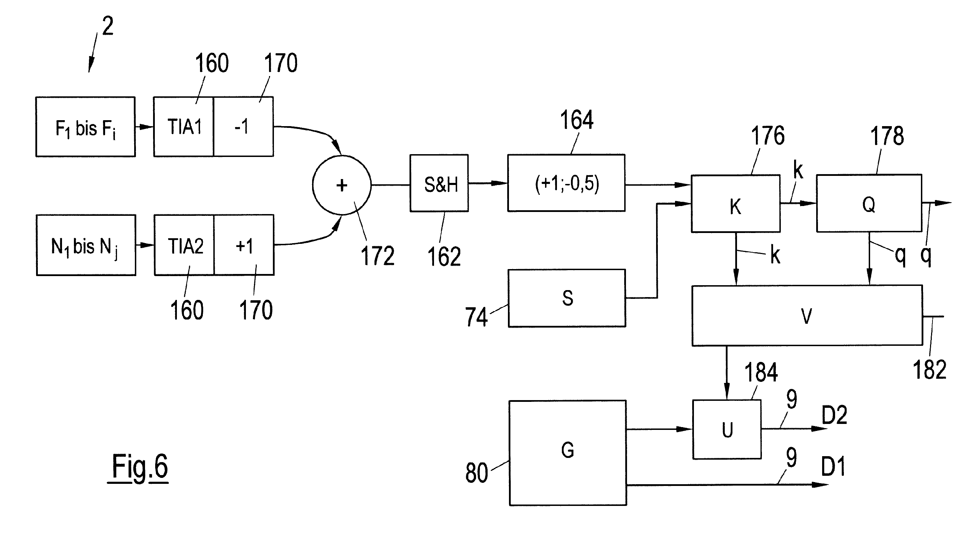

Das erfindungsgemäße Verfahren wird zum Beispiel mit einer Anordnung der Fig. 3 durchgeführt, wobei die in Fig. 6 gezeigten erfindungsgemäßen Auswerte- bzw. Steuerungsschritte in einer erfindungsgemäß abgewandelten Auswerteeinrichtung 108 implementiert und durchgeführt werden, die auch wie weiter unten beschrieben Steuerungsaufgaben übernehmen kann und insofern eine Auswerte- und Steuerungseinrichtung darstellen kann, auch wenn sie hier der Einfachheit halber als Auswerteeinrichtung bezeichnet wird. Die einzelnen funktionellen Stufen der Verarbeitung innerhalb der Auswerteeinrichtung werden hier als "Stufen" oder "Einheiten" bezeichnet (also zum Beispiel "Gewichtungseinheit" bzw. "Gewichtungsstufe").

Eine Ausgestaltung des erfindungsgemäßen Verfahrens wird anhand der schematischen Darstellung in Fig. 6 erläutert. Bezug genommen wird auch auf die Fig. 3, die, wenn zum Beispiel in der Auswerteeinrichtung 108 die besondere Ausgestaltung der Auswertung gemäß der Fig. 6 implementiert ist, eine Ausführungsform eines erfindungsgemäßen Sensors im Betrieb zeigt. Bezüglich der Funktion der übrigen Komponenten des Triangulationstasters wird auf die obige Schilderung verwiesen.

Fig. 6 deutet im linken Teil die Empfängerelementeanordnung 2 an. Die Darstellung soll so verstanden werden, dass hier Fernbereichsempfängerelemente F₁ bis Fi und Nahbereichsempfängerelemente N₁ bis Nⱼ vorgesehen sind. Die Signale der Fernbereichsempfängerelemente werden zunächst zum Beispiel durch Addition kombiniert, während die Signale der Nahbereichsempfängerelemente ebenfalls zum Beispiel durch Addition der Signale kombiniert werden. Auf diese Weise sind auch bei einer größeren Anzahl von Fernbereichsempfangselementen bzw. Nahbereichsempfangselementen nur noch zwei Kanäle zur weiteren Verarbeitung notwendig. Selbstverständlich kann auch die Anzahl der Fernbereichsempfangselemente gleich der Anzahl der Nahbereichsempfangselemente sein, das heißt in der gewählten Darstellung i = j. Außerdem ist bei einer besonders einfachen Ausgestaltung nur ein Fernbereichsempfangselement und nur ein Nahbereichsempfangelement vorgesehen, das heißt i = j = 1.

In der Auswerteeinrichtung 108 (Fig. 3) werden die Signale der beiden Kanäle in Transimpedanzverstärkern 160 (TIA1, TIA2) verstärkt. In den zwei Multiplikationsstufen 170 werden die resultierenden verstärkten Signale mit -1 (für den Kanal der Fernbereichsempfangselemente) bzw. + 1 (für den Kanal der Nahbereichsempfangelemente) multipliziert und in dem Addierer 172 addiert.

Die Multiplikation in den Multiplikationsstufen 170 stellt sicher, dass Signale, die von Objekten auf der Sendelichtachse 36, die im Bereich zwischen den Bereichsgrenzen 22 und 24 von den Sendelichtpulsen 20 getroffen werden und somit Licht in Richtung des Nahbereichsteils 4 der Empfängerelementeanordnung 2 reflektieren, mit positivem Vorzeichen in die Auswertung eingehen. Andererseits stellt die Multiplikation mit dem Faktor -1 der Signale aus dem Fernbereichsteil der Empfängerelementeanordnung 2 sicher, dass Objekte, die auf der Sendelichtachse 36 im Fernbereich 54 von den Sendelichtpulsen 20 zwischen den Bereichsgrenzen 24 und 26 getroffen werden, und insofern Licht in Richtung des Fernbereichsteils 6 der Empfängerelementeanordnung 2 reflektieren, mit negativem Vorzeichen in die Auswertung eingehen.

Nach dem Addierer ist nur noch eine einkanalige Weiterverarbeitung nötig.

Erst das durch die Addition im Addierer 172 entstandene Signal wird mit der "Sample & Hold"-Stufe 162 ("S & H") abgetastet. In der Gewichtungsstufe 164 wird das abgetastete Signal mit entsprechenden Gewichtungsfaktoren multipliziert, wie sie zum Beispiel in Fig. 5 mit g bezeichnet sind. Sendet zum Beispiel gerade die Sendelichtdiode D 1 der Fig. 3 einen Lichtpuls, so wird ein Gewichtungsfaktor von +1 verwendet. Sendet hingegen gerade die Diffuslichtdiode D2 einen Lichtpuls, so wird ein Gewichtungsfaktor g von -0,5 gewählt. Die Auswahl dieser Gewichtungsfaktoren ist dabei so, dass die Summe über einen Abtastzyklus (wie er in Fig. 5 gezeigt ist) gleich Null ist.

Das resultierende Signal wird einem Komparator 176 ("K") zugeführt. Dieser vergleicht das zugeführte Signal mit einer Schwelle, die von dem Schwellwertgenerator 24 ("S") zur Verfügung gestellt wird. Das Vergleichsergebnissignal k am Ausgang des Komparators 176 wird einer Mehrbitverarbeitung in der Mehrbitverarbeitungseinheit 178 unterzogen.

Die Mehrbitverarbeitung wird dabei bei der hier beschriebenen Ausgestaltung zum Beispiel wie folgt durchgeführt. Die Mehrbittiefe sei dabei zum Beispiel N = 100. In der Verarbeitungseinheit 182 werden der aktuelle binäre Schaltausgang q der Mehrbitverarbeitungseinheit 178 und der binäre Ausgang k des Komparators 176 miteinander verglichen. Wenn sich der binäre Ausgang des Komparators 176 ändert, so wird eine der Mehrbittiefe N entsprechenden Anzahl von Abtastzyklen abgewartet, ob dann noch immer der geänderte Zustand vorliegt. Dafür kann zum Beispiel das Ausgangssignal k des Komparators 176 mit dem Ausgangssignal q der Mehrbitverarbeitungseinheit 178 in der Verarbeitungseinheit 182 verglichen werden. Liegt ein veränderter Zustand vor, so gibt die Verarbeitungseinheit 182 ein Signal an die Umschalteinheit 184 ("U"), die den Betriebszustand der Diffuslichtdiode D2 ändert. Anders ausgedrückt wird der Betriebszustand der Diffuslichtdiode sofort geändert, wenn sich während eines Zyklus das Vergleichsergebnissignal k und das Ausgangssignal q der Mehrbitverarbeitungseinheit 178 unterscheiden. Ist über N Abtastzyklen hintereinander k ungleich q, wird q umgeschaltet.

Ändert sich das Ausgangssignal k des Komparators 176 hingegen nicht, so sind die Ausgangssignale k des Komparators 176 und das Ausgangssignal q der Mehrbitverarbeitungseinheit 178 immer gleich. Die Verarbeitungseinheit 182 bleibt insofern untätig und gibt kein Schaltsignal an die Umschalteinheit 184, so dass die Diffuslichtdiode D2 ihren Zustand beibehält.

In Software kann eine Mehrbitverarbeitung zum Beispiel wie folgt implementiert werden:
Es wird ein Zähler CNT mit einem Initialwert 0 angenommen. k bezeichnet wiederum das Ausgangssignal des Komparators 176, das dem Eingangssignal der Mehrbitverarbeitungseinheit 178 entspricht. Deren Ausgangssignal wird wiederum mit q bezeichnet und die Mehrbittiefe mit N. Für jeden Zyklus wird folgende Regel ausgeführt:
   Wenn k gleich q ist, dann wird CNT gleich 0 gesetzt (d.h. bei Gleichheit der Signale wird der Zähler zurückgesetzt). Wenn hingegen k ungleich q gilt, dann wird CNT auf + 1 gesetzt (der Zähler wird dementsprechend bei Ungleichheit inkrementiert). Wenn schließlich CNT gleich N ist, dann wird q gleich k gesetzt und CNT auf 0.

Der Signalgenerator 80 steuert die Sendelichtdiode D 1 und die Diffuslichtdiode D2 über Steuerleitungen 9 an, wie es rechts unten in der Fig. 6 angedeutet ist. Dabei wird zum Beispiel pro Abtastzyklus eine Ansteuerung gewählt, die den oberen beiden Graphen der Fig. 5 entspricht.

In Abhängigkeit des Ergebnisses der Verarbeitungseinheit 182 wird gegebenenfalls die Umschalteinheit 184 in beschriebener Weise betätigt, um zum Beispiel die Aussendung von Sendelichtpulsen durch die Diffuslichtdiode D2 zu beenden bzw. - wenn gerade ohnehin von der Diffuslichtdiode D2 keine Sendelichtpulse ausgesendet werden - wieder die Signalansteuerung mit dem in Fig. 5 gezeigten zeitlichen Ablauf für die D2 einzuschalten.

Die Wirkungsweise dieser erfindungsgemäßen Ausgestaltung ist wie folgt.

Bewegt sich im Nahbereich 52 (Fig. 3) ein Objekt 18 (Fig. 2) derart durch die Sendelichtachse 36, dass es von den Sendelichtpulsen 20 der Sendelichtdiode D1 getroffen wird, so reflektiert dieses Objekt Licht durch die Empfängeroptik 12 des optoelektronischen Sensors 1 in Richtung des Nahbereichsteils 4 der Empfängerelementeanordnung 2.

Diese entlang der Sendelichtachse 36 ausgesendeten Lichtpulse 20 sind auf jeden Fall von höherer Intensität als das Streulicht, das aufgrund einer Verschmutzung der Frontscheibe 14 in dem in Fig. 3 angeordneten Lichtkegel zwischen den Begrenzungslinien 42 und 44 auftritt. Außerdem ist die Intensität der Lichtpulse 20 auch höher als die Intensität des Lichts, das gegebenenfalls von der Diffuslichtdiode D2 in den Raum zwischen den Begrenzungslinien 48 und 50 ausgesendet wird. Im Falle der Anwesenheit eines Objekts im Nahbereich 52, das von den Sendelichtpulsen 20 getroffen wird, ist also in der Regel mit einer korrekten Detektion der Anwesenheit dieses Objekts zu rechnen.

Weil das Objekt im Nahbereich 52 von den Sendelichtpulsen 20 getroffen wird, wird es in der Multiplikationsstufe 170 mit einem positiven Faktor bewertet und der weiteren Verarbeitung zugeführt. Nachdem das Licht der Diffuslichtdiode D2 und gegebenenfalls durch die Frontscheibe erzeugtes Streulicht der Sendelichtdiode D 1 eine im Vergleich zu den Sendelichtpulsen 20, die auf das Objekt treffen, vernachlässigbare Intensität haben, ist mit einer korrekten Detektion des Objekts zu rechnen.

Befindet sich jedoch kein Objekt im Nahbereich 52, existiert keine intensitätsstarke Reflexion. Auch ein geringeres Signal an der Empfängerelementeanordnung 2 kann als Objektanwesenheitssignal misinterpretiert werden.

Tritt zum Beispiel im Fernbereich 54 ein reflektierendes Objekt 40 in den Messraum ein, so kann (wie es zum Beispiel in Fig. 2 dargestellt ist) reflektiertes Licht auch auf den Nahbereichsteil 4 der Empfängerelementeanordnung 2 treffen, wenn sich Licht der Diode D 1 aufgrund einer Verschmutzung der Frontscheibe 14 als Streulicht auch zwischen den Begrenzungslinien 42 und 44 ausbreitet.

Die erfindungsgemäße Anordnung verhindert entsprechende Fehler.

Das Messsignal an den Empfängerelementen des Nahbereichsteils der Empfängerelementeanordnung 2 wird nach Verstärkung und Multiplikation mit dem Faktor + 1 in der Abtaststufe 162 abgetastet und nach der Gewichtung dem Komparator 176 zugeführt. Durch das Eintreten des reflektierenden Elements 40 in einen Bereich, in dem das Streulicht der Sendelichtdiode D 1 in Richtung des Nahbereichsteils der Empfängerelementeanordnung 2 reflektiert wird, ändert sich das Ausgangssignal des Komparators 176, so dass - nach der oben beschriebenen Mehrbitverarbeitung - gegebenenfalls ein Umschaltsignal an die Umschalteinheit 184 gegeben wird. Die Sendelichtdiode D2 wird daraufhin zugeschaltet und nimmt für den nächsten Abtastzyklus den Verlauf der mittleren Linie der Fig. 5 an. Das von der Abtaststufe 162 abgegebene Signal wird - je nachdem, welche Diode gerade einen Sendepuls aussendet - mit dem Gewichtungsfaktor g gemäß der unteren Linie der Fig. 5 multipliziert. Wenn also reflektiertes Licht der Diffuslichtdiode D2 von dem Reflektor 40 in Richtung der Empfängerelementeanordnung 2 zurückgeworfen wird, so wird das entsprechende Signal negativ gewertet, während Licht, das von dem Reflektor 40 in Richtung der Empfängerelementeanordnung 2 zurückgeworfen wird, wenn die Sendelichtdiode D 1 einen Puls aussendet, positiv gewertet wird. Durch geeignete Auswahl des Gewichtungsfaktors g wird erreicht, dass das Gesamtsignal, welches durch konstantes Umgebungslicht (z.B. Sonnenlicht) am Ausgang der Gewichtungsstufe 164 entsteht, Null ist. Wenn z.B. g wie im unteren Diagramm der Fig. 5 gewählt ist (also { -0,5; +1; -0,5}), gilt bei einem konstanten Signal a des Empfängers: -0,5*a + 1*a - 0,5*a = 0.

Die erfindungsgemäße Anordnung benötigt also - anders als zum Beispiel die mit Bezug zu Fig. 4 erläuterte Verfahrensführung des Standes der Technik - eine deutlich geringere Anzahl zu verarbeitender Kanäle. Es ist nur eine Abtaststufe 162 und nur eine Gewichtungseinheit 164 notwendig. Außerdem sind keine Clipping-Schritte notwendig, die bei Fig. 4 mit C bezeichnet sind und dazu dienen, negative Signalanteile zu eliminieren. Anders als bei der bekannten Verfahrensführung ist hier das Sendeverhalten der Diffuslichtdiode D2 nicht nur alleine durch die Signale des Signalgenerators 80 bestimmt, sondern es wird in Abhängigkeit des detektierten Ergebnisses Einfluss auf den Betriebszustand der Diffuslichtdiode D2 genommen.

Eine typische Anordnung ist zum Beispiel ein Förderband für Gepäckstücke, das gegebenenfalls vorhandene Gepäckstücke an dem Sensor 1 vorbeiführt, dass sie die sich auf der Sendeachse 36 ausbreitenden Sendelichtpulse 20 kreuzen. Bewegt sich also ein Gepäckstück durch die Sendelichtachse, kann dessen Anwesenheit sicher detektiert werden.

Bei dem unerwünschten Reflektor 40 kann es sich zum Beispiel um die Warnweste eines Bedieners handeln oder ein reflektierendes Fenster, das zum Beispiel in eine Kippstellung gebracht wird, wodurch gegebenenfalls an der Frontscheibe 14 erzeugtes Streulicht in Richtung des Sensors zurückreflektiert wird.

### Bezugszeichenliste

- 1: Sensor
- 2: Empfängerelementeanordnung
- 4: Nahbereichsteil
- 5: Grenze innerhalb der Empfängerelementeanordnung
- 6: Fernbereichsteil
- 7: Signalleitung
- 8, 108: Auswerte- und Steuereinrichtung
- 9: Steuerleitung
- 10: Sendeoptik
- 12: Empfangsoptik
- 14: Frontscheibe
- 16: Lichtleiter
- 18: Objekt
- 20: Sendelichtpulse
- 22, 24, 26: Bereichsgrenze
- 28: reflektiertes Licht
- 30: eingestellte Tastweite
- 32: Sender-/Empfängerebene
- 34: Empfängerachse
- 36: Sendeachse
- 40: Reflektor
- 42, 44: Lichtkegelgrenzen
- 46: reflektiertes Licht
- 48, 50: Lichtkegelgrenzen
- 52: Nahbereich
- 54: Fernbereich
- 60, 160: Transimpedanzverstärker
- 62, 162: Abtaststufe
- 64, 164: Gewichtungsstufe
- 66: Integrator
- 68: Clipping-Einheit
- 70, 170: Multiplikationsstufe
- 72, 172: Addierer
- 74: Schwellwertgeber
- 76, 176: Komparator
- 78: Mehrbitverarbeitungseinheit
- 80: Sendepulsgenerator
- 182: Verarbeitungseinheit
- 184: Umschalteinheit

- D 1: Sendelichtdiode
- D2: Diffuslichtdiode
- g: Gewichtungsfaktor
- k: Ausgangssignal des Komparators, Vergleichsergebnissignal
- q: Ausgangssignal der Mehrbitverarbeitungseinheit, Anwesenheitssignal

## Patentansprüche

1. Verfahren zur Bestimmung der Anwesenheit eines Objektes (18) in einem Überwachungsraum oder einem zu überwachenden Teil eines Überwachungsraumes mit einem nach dem Triangulationsprinzip arbeitenden optoelektronischen Sensor (1), bei dem
- Lichtpulse (20) einer ersten Sendelichtquelle (D1) in Richtung eines Überwachungsraumes gesendet werden,
- mit einer zweiten Sendelichtquelle (D2) in einem zugeschalteten Zustand aufgeweitete Lichtpulse zeitversetzt, insbesondere alternierend, zu den Lichtpulsen (20) der ersten Lichtquelle (D1) in Richtung des Überwachungsraumes gesendet werden,
- bei Anwesenheit eines Objektes (18) von diesem reflektiertes oder remittiertes Licht mit einer Empfängerelementeanordnung (2) empfangen wird, wobei die Empfängerelementeanordnung (2) einen mindestens ein Empfangselement aufweisenden Nahbereichsteil (4) und einen mindestens ein Empfangselement aufweisenden Fernbereichsteil (6) umfasst,
- Signale von Empfängerelementen (N₁, ... Nⱼ) des Nahbereichsteiles (4) oder davon abgeleitete Signale mit einem Faktor mit einem ersten Vorzeichen und Signale von Empfängerelementen (F₁, ... Fᵢ) des Fernbereichsteiles (6) oder davon abgeleitete Signale mit einem Faktor mit dem entgegengesetzten Vorzeichen in einem Multiplikationsschritt multipliziert und in einem Additionsschritt addiert werden,
- das resultierende Summensignal oder ein daraus abgeleitetes Signal mit einem Schwellwert verglichen wird und das resultierende Vergleichsergebnissignal (k) einer Mehrbitverarbeitung mit einer Mehrbittiefe N von wenigstens zwei unterzogen wird, deren Ausgangssignal Änderungen des Vergleichsergebnissignals (k) nicht sofort, sondern erst dann folgt, wenn nach einer Anzahl von Abtastzyklen, die der Mehrbittiefe (N) entspricht, noch immer das abweichende Vergleichsergebnissignal anliegt, wobei das Ausgangssignal der Mehrbitverarbeitung als Anwesenheitssignal (q) verwendet wird um die Anwesenheit eines Objektes (18) in einem Nahbereich (52) zu detektieren, der durch einen Bereich des Überwachungsraumes gebildet ist, der näher an dem Sensor (1) als ein Fernbereich (54) ist, oder um die Anwesenheit eines Objektes in einem Fernbereich (54) zu detektieren, der durch einen Bereich des Überwachungsraumes gebildet ist, der weiter entfernt von dem Sensor (1) als ein Nahbereich (52) ist, und
- in einem Gewichtungsschritt Signale, die von der Empfängerelementeanordnung (2) während Lichtpulsen (20) der ersten Sendelichtquelle (D1) empfangen werden, mit einem ersten Gewichtungsfaktor und Signale, die von der Empfängerelementeanordnung (2) während Lichtpulsen der zweiten Sendelichtquelle (D2) empfangen werden, mit einem von dem ersten Gewichtungsfaktor unterschiedlichen zweiten Gewichtungsfaktor gewichtet werden,
wobei
- das nach dem Additionsschritt vorliegende Summensignal abgetastet wird und das entstehende Abtastsignal nach dem Gewichtungsschritt mit dem Schwellwert verglichen wird und
- bei einer Änderung einer Beziehung zwischen dem Anwesenheitssignal (q) nach der Mehrbitverarbeitung und dem Vergleichsergebnissignal (k) der Betriebszustand der zweiten Sendelichtquelle (D2) geändert wird.

2. Verfahren nach Anspruch 1, **dadurch gekennzeichnet, dass** ein binäres Ausgangssignal der Mehrbitverarbeitung als Anwesenheitssignal (q) und das Vergleichsergebnissignal (k) als binäres Eingangssignal der Mehrbitverarbeitung verwendet werden und die Mehrbitverarbeitung derart durchgeführt wird, dass das binäre Ausgangssignal der Mehrbitverarbeitung dem binären Eingangssignal der Mehrbitverarbeitung folgt, wenn das binäre Eingangssignal der Mehrbitverarbeitung über N aufeinanderfolgende Abtastzyklen hinweg ungleich dem binären Ausgangssignal der Mehrbitverarbeitung ist.

3. Verfahren nach einem der Ansprüche 1 oder 2, **dadurch gekennzeichnet, dass** die Änderung der Beziehung zwischen dem Vergleichsergebnissignal (k) und dem Anwesenheitssignal (q) den Wechsel von einem Zustand, in dem das Vergleichsergebnissignal (k) und das Anwesenheitssignal (q) gleich sind, in einen Zustand, in dem sie voneinander abweichen, umfasst.

4. Verfahren nach einem der Ansprüche 1 bis 3, **dadurch gekennzeichnet, dass** die Änderung des Betriebszustandes der zweiten Sendelichtquelle (D2) das Ausschalten aus einem zugeschalteten Zustand oder das Zuschalten aus einem ausgeschalteten Zustand umfasst.

5. Verfahren nach einem der Ansprüche 1 bis 4, **dadurch gekennzeichnet, dass** Signale von Empfängerelementen (N₁, ... Nⱼ) des Nahbereichsteiles (4) vor dem Multiplikationsschritt untereinander addiert oder gemittelt werden und Signale von Empfängerelementen (F₁, ... Fi) des Fernbereichsteiles (6) untereinander addiert oder gemittelt werden.

6. Verfahren nach einem der Ansprüche 1 bis 5, **dadurch gekennzeichnet, dass** die Gewichtungsfaktoren (g) derart gewählt werden, dass ihre Summe während eines Abtastzyklus null ist.

7. Optoelektronischer Sensor (1), der nach dem Triangulationsprinzip arbeitet, zur Bestimmung der Anwesenheit eines Objektes (18) in einem Überwachungsraum oder einem zu überwachenden Teil eines Überwachungsraumes, mit
(i) einer ersten Sendelichtquelle (D1) zur Aussendung von Lichtpulsen (20) in Richtung eines Überwachungsraumes,
(ii) einer zweiten Sendelichtquelle (D2), die in einem zugeschalteten Zustand aufgeweitete Lichtpulse zeitversetzt, insbesondere alternierend, zu den Lichtpulsen (20) der ersten Lichtquelle (D1) in Richtung des Überwachungsraumes sendet,
(iii) einer Empfängerelementeanordnung (2) zum Empfang von bei Anwesenheit eines Objektes (18) von diesem reflektiertem oder remittiertem Licht (28), wobei die Empfängerelementeanordnung (2) einen mindestens ein Empfangselement aufweisenden Nahbereichsteil (4) und einen mindestens ein Empfangselement aufweisenden Fernbereichsteil (6) umfasst, und
(iv) einer Auswerteeinrichtung (108), die folgendes umfasst:
- eine Multiplikationseinheit (170), die ausgestaltet ist, Signale von Empfängerelementen (N₁, ... Nⱼ) des Nahbereichsteiles (4) oder davon abgeleitete Signale mit einem Faktor mit erstem Vorzeichen und Signale von Empfängerelementen (F₁, ... Fᵢ) des Fernbereichsteiles (6) oder davon abgeleitete Signale mit einem Faktor mit dem entgegengesetzten Vorzeichen in einem Multiplikationsschritt zu multiplizieren,
- eine Additionseinheit (172), die die multiplizierten Signale addiert,
- eine Vergleichseinheit (176), die ausgestaltet ist, das resultierende Summensignal oder ein daraus abgeleitetes Signal mit einem Schwellwert zu vergleichen, und
- eine Mehrbitverarbeitungseinheit (178), die das Vergleichsergebnissignal (k) der Vergleichseinheit (176) einer Mehrbitverarbeitung mit einer Mehrbittiefe von wenigstens zwei unterzieht, deren Ausgangssignal Änderungen des Vergleichsergebnissignals (k) nicht sofort, sondern erst dann folgt, wenn nach einer Anzahl von Abtastzyklen, die der Mehrbittiefe (N) entspricht, noch immer das abweichende Vergleichsergebnissignal anliegt, wobei das Ausgangssignal der Mehrbitverarbeitung als Anwesenheitssignal (q) verwendet wird um die Anwesenheit eines Objektes (18) in einem Nahbereich (52) zu detektieren, der durch einen Bereich des Überwachungsraumes gebildet ist, der näher an dem Sensor (1) als ein Fernbereich (54) ist, oder um die Anwesenheit eines Objektes in einem Fernbereich (54) zu detektieren, der durch einen Bereich des Überwachungsraumes gebildet ist, der weiter entfernt von dem Sensor (1) als ein Nahbereich (52) ist, und
- eine Gewichtungseinheit (164), die in einem Gewichtungsschritt Signale, die von der Empfängerelementeanordnung (2) während Lichtpulsen (20) der ersten Sendelichtquelle (D1) empfangen werden, mit einem ersten Gewichtungsfaktor und Signale, die von der Empfängerelementeanordnung (2) während Lichtpulsen der zweiten Sendelichtquelle (D2) empfangen werden, mit einem zweiten Gewichtungsfaktor gewichtet,
wobei die Auswerteeinrichtung (108) ferner umfasst:
- eine Abtasteinheit (162) zwischen der Additionseinheit (172) und der Gewichtungseinheit (164), mit der das nach dem Additionsschritt vorliegende Summensignal abgetastet wird, wobei die Gewichtungseinheit (164) zwischen der Abtasteinheit (162) und der Vergleichseinheit (176) angeordnet ist, und
- eine Umschalteinheit (184), die bei einer Änderung der Beziehung zwischen dem Anwesenheitssignal (q) nach der Mehrbitverarbeitung durch die Mehrbitverarbeitungseinheit (178) und dem Vergleichsergebnissignal (k), das von der Vergleichseinheit (176) ausgegeben wird, den Betriebszustand der zweiten Sendelichtquelle (D2) ändert.

8. Optoelektronischer Sensor (1) nach Anspruch 7, **dadurch gekennzeichnet, dass** die Auswerteeinrichtung (108) zur Durchführung eines Verfahrens ausgestaltet ist, bei dem die Mehrbitverarbeitungseinheit (178) der Auswerteeinrichtung (108) die Mehrbitverarbeitung gemäß Anspruch 2 durchführt.

9. Optoelektronischer Sensor (1) nach Anspruch 7, **dadurch gekennzeichnet, dass** er zur Durchführung eines Verfahrens nach einem der Ansprüche 1 bis 6 ausgestaltet ist.

## Claims

1. A method of determining the presence of an object (18) in a monitored zone or in a part of a monitored zone to be monitored, comprising an optoelectronic sensor (1) which works in accordance with the triangulation principle, in which
- light pulses (20) of a first transmitted light source (D 1) are transmitted in the direction of a monitored space;
- light pulses which are widened are transmitted by a second transmitted light source (D2) in a switched-on state in the direction of the monitored space offset in time, in particular alternately, to the light pulses (20) of the first light source (D1);
- on the presence of an object (18), light reflected or remitted thereby is received by a receiver element arrangement (2), wherein the receiver element arrangement (2) comprises a near zone part (4) having at least one reception element and a far zone part (6) having at least one reception element;
- signals of receiver elements (N₁, ... Nⱼ) of the near zone part (4) or signals derived therefrom are multiplied by a factor having a first sign and signals of receiver elements (F₁, ... Fⱼ) of the far zone part (6) or signals derived therefrom are multiplied by a factor having the opposite sign in a multiplication step and are added in an addition step;
- the resulting sum signal or a signal derived therefrom is compared with a threshold value and the resulting comparison result signal (k) is subjected to a multibit processing with a multibit depth N of at least two whose output signal does not follow changes in the comparison result signal (k) immediately, but only when the deviating comparison result signal is still present after a number of sampling cycles which corresponds to the multibit depth (N), wherein the output signal of the multibit processing is used as a presence signal (q) to detect the presence of an object (18) in a near zone (52) which is formed by a zone of the monitored space which is closer to the sensor (1) than a far zone (54) or to detect the presence of an object in a far zone (54) which is formed by a zone of the monitored space which is further remote from the sensor (1) than a near zone (52); and
- in a weighting step, signals which are received by the receiver element arrangement (2) during light pulses (20) of the first transmitted light source (D1) are weighted by a first weighting factor and signals which are received by the receiver element arrangement (2) during light pulses of the second transmitted light source (D2) are weighted by a second weighting factor differing from the first weighting factor,
wherein
- the sum signal present after the addition step is sampled and the arising sampled signal is compared with the threshold value after the weighting step; and
- on a change of a relationship between the presence signal (q) after the multibit processing and the comparison result signal (k), the operating state of the second transmitted light source (D2) is changed.

2. A method in accordance with claim 1, **characterized in that** a binary output signal of the multibit processing is used as the presence signal (q) and the comparison result signal (k) is used as the binary input signal of the multibit processing and the multibit processing is carried out such that the binary output signal of the multibit processing follows the binary input signal of the multibit processing when the binary input signal of the multibit processing is not equal to the binary output signal of the multibit processing over N consecutive sampling cycles.

3. A method in accordance with one of the claims 1 or 2, **characterized in that** the change of the relationship between the comparison result signal (k) and the presence signal (q) comprises the change from a state in which the comparison result signal (k) and the presence signal (q) are equal into a state in which they differ from one another.

4. A method in accordance with any one of the claims 1 to 3, **characterized in that** the change in the operating state of the second transmitted light source (D2) comprises the switching off from a switched-on state or the switching on from a switched-off state.

5. A method in accordance with any one of the claims 1 to 4, **characterized in that** signals from the receiver elements (N₁, ... Nⱼ) of the near zone part (4) are added to one another or averaged among one another before the multiplication step and signals from receiver elements (F₁, ... Fⱼ) of the far zone part (6) are added to one another or averaged among one another.

6. A method in accordance with any one of the claims 1 to 5, **characterized in that** the weighting factors (g) are selected such that their sum is zero during a sampling cycle.

7. An optoelectronic sensor (1) which works in accordance with the triangulation principle for determining the presence of an object (18) in a monitored space or in a part of a monitored space to be monitored, comprising
(i) a first transmitted light source (D1) for transmitting light pulses (20) in the direction of a monitored space;
(ii) a second transmitted light source (D2) which transmits widened light pulses in the switched-on state in the direction of the monitored space offset in time, in particular alternately, to the light pulses (20) of the first transmitted light source (D1);
(iii) a receiver element arrangement (2) for receiving, on a presence of an object (18), light (28) reflected or remitted thereby, wherein the receiver element arrangement (2) comprises a near zone part (4) having at least one reception element and a far zone part (6) having at least one reception element; and
(iv) an evaluation device (108) which comprises the following:
- a multiplication unit (170) which is configured to multiply signals from receiver elements (N₁, ... Nⱼ) of the near zone part (4) or signals derived therefrom by a factor having a first sign and to multiply signals from receiver elements (F₁, ... Fⱼ) of the far zone part (6) or signals derived therefrom by a factor having the opposite sign in a multiplication step;
- an addition unit (172) which adds the multiplied signals;
- comparison unit (176) which is configured to compare the resulting sum signal or a signal derived therefrom with a threshold value; and
- a multibit processing unit (178) which subjects the comparison result signal (k) of the comparison unit (176) to a multibit processing having a multibit depth of at least two whose output signal does not immediately follow changes of the comparison result signal (k) immediately, but rather only when the deviating comparison result signal is still present after a number of sampling cycles which corresponds to the multibit depth, wherein the output signal of the multibit processing is used as the presence signal (q) to detect the presence of an object (18) in a near zone (52) which is formed in a zone of the monitored space which is closer to the sensor (1) than a far zone (54) or to detect the presence of an object in a far zone (54) which is formed by a zone of the monitored space which is further remote from the sensor (1) than a near zone (52); and
- a weighting unit (164) which, in a weighting step, weights signals which are received by the receiver element arrangement (2) during light pulses (20) of the first transmitted light source (D1) with a first weighting factor and which weights signals which are received by the receiver element arrangement (2) during light pulses of the second light source (D2) with a second weighting factor;
wherein the evaluation device (10) furthermore comprises:
- a sampling unit (162) between the addition unit (172) and the weighting unit (164) with which the sum signal present after the addition step is sampled, wherein the weighting unit (164) is arranged between the sampling unit (162) and the comparison unit (176); and
- a switch-over unit (184) which changes the operating state of the second transmitted light source (D2) on a change in the relationship between the presence signal (q) after the multibit processing by the multibit processing unit (178) and the comparison result signal (k) which is output by the comparison unit (176).

8. An optoelectronic sensor (1) in accordance with claim 7, **characterized in that** the evaluation unit (108) is configured for carrying out a method in which the multibit processing unit (178) of the evaluation unit (108) carries out the multibit processing in accordance with claim 2.

9. An optoelectronic sensor (1) in accordance with claim 7, **characterized in that** it is configured for carrying out a method in accordance with any one of the claims 1 to 6.

## Revendications

1. Procédé pour la détermination de la présence d'un objet (18) dans un espace de surveillance ou dans une partie à surveiller d'un espace de surveillance avec un capteur optoélectronique (1) fonctionnant d'après le principe de triangulation, dans lequel
- on émet des impulsions de lumière (20) d'une première source de lumière émise (D1) en direction d'un espace de surveillance,
- on émet, avec une seconde source de lumière émise (D2), des impulsions de lumière élargies dans un état mis en service, de façon décalée dans le temps et en particulier en alternance par rapport aux impulsions de lumière (20) de la première source de lumière (D1), en direction de l'espace de surveillance,
- on reçoit, en cas de présence d'un objet (18), avec un agencement d'éléments récepteurs (2), la lumière réémise ou réfléchie par celui-ci, de sorte que l'agencement d'éléments récepteurs (2) inclut une partie de zone proche (4) comprenant au moins un élément récepteur et une partie de zone lointaine (6) comprenant au moins un élément récepteur,
- on multiplie des signaux provenant d'éléments récepteurs (N1, ..., Nj) de la partie de zone proche (4) ou des signaux dérivés de ceux-ci avec un facteur avec un premier signe, et des signaux provenant d'éléments récepteurs (F1, ..., Fi) de la partie de zone lointaine (6) ou des signaux dérivés de ceux-ci avec un facteur avec le signe opposé dans une étape de multiplication, et on les additionne dans une étape d'addition,
- le signal de somme résultant ou un signal dérivé de celui-ci est comparé avec une valeur seuil et le signal de résultat de comparaison résultant (k) est soumis à un traitement multibit avec une profondeur multibit (N) d'au moins deux, dont le signal de sortie suit le signal de résultat de comparaison (k) non pas immédiatement, mais uniquement lorsqu'après un certain nombre de cycles d'échantillonnage, qui correspond à la profondeur multibit (N), le signal de résultat de comparaison différent est toujours appliqué, et le signal de sortie du traitement multibit est utilisé comme signal de présence (q) afin de détecter la présence d'un objet (18) dans une zone proche (52), qui est formée par une zone de l'espace de surveillance qui est plus proche du capteur (1) qu'une zone lointaine (54), ou bien pour détecter la présence d'un objet dans une zone lointaine (54) qui est formée par une zone de l'espace de surveillance qui est plus éloignée du capteur (1) qu'une zone proche (52), et
- dans une étape de pondération, des signaux qui sont reçus par l'agencement d'éléments récepteurs (2) pendant des impulsions de lumière (20) de la première source de lumière émise (D1) sont pondérés avec un premier facteur de pondération, et des signaux qui sont reçus par l'agencement d'éléments récepteurs (2) pendant des impulsions de lumière de la seconde source de lumière émise (D2), sont pondérés avec un second facteur de pondération différent du premier facteur de pondération,
dans lequel
- le signal de somme qui se présente après l'étape d'addition est échantillonné, et le signal d'échantillonnage résultant après l'étape de pondération est comparé avec la valeur seuil, et
- en cas de modification d'une relation entre le signal de présence (q) après le traitement multibit et le signal résultant de comparaison (k) on modifie l'état de fonctionnement de la seconde source de lumière émise (D2).

2. Procédé selon la revendication 1, **caractérisé en ce que** l'on utilise un signal de sortie binaire du traitement multibit à titre de signal de présence (q), et le signal de résultat de comparaison (k) à titre de signal d'entrée binaire du traitement multibit, et le traitement multibit est exécuté de telle façon que le signal de sortie binaire du traitement multibit suit le signal d'entrée binaire du traitement multibit quand le signal d'entrée binaire du traitement multibit n'est pas égal au signal de sortie binaire du traitement multibit sur plus de N cycles d'échantillonnage successifs.

3. Procédé selon l'une des revendications 1 ou 2, **caractérisé en ce que** la variation de la relation entre le signal de résultat de comparaison (k) et le signal de présence (q) inclut le changement depuis un état dans lequel le signal de résultat de comparaison (k) et le signal de présence (q) sont égaux, vers un état dans lequel ils diffèrent l'un de l'autre.

4. Procédé selon l'une des revendications 1 à 3, **caractérisé en ce que** la variation de l'état de fonctionnement de la seconde source de lumière émise (D2) inclut la mise à l'arrêt depuis un état en service, ou bien la mise en service depuis un état arrêté.

5. Procédé selon l'une des revendications 1 à 4, **caractérisé en ce que** les signaux provenant d'éléments récepteurs (N1, ..., Nj) de la partie de zone proche (4) sont additionnés les uns avec les autres ou moyennés avant l'étape de multiplication, et les signaux provenant d'éléments récepteurs (F1, ..., Fi) de la partie de zone lointaine (6) sont additionnés les uns avec les autres ou moyennés.

6. Procédé selon l'une des revendications 1 à 5, **caractérisé en ce que** les facteurs de pondération (g) sont choisis de telle manière que leur somme est nulle pendant un cycle d'échantillonnage.

7. Capteur optoélectronique (1), qui fonctionne d'après le principe de triangulation, pour la détermination de la présence d'un objet (18) dans un espace de surveillance ou dans une partie à surveiller d'un espace de surveillance, comprenant
(i) une première source de lumière émise (D1) pour émettre des impulsions de lumière (20) en direction d'un espace de surveillance,
(ii) une seconde source de lumière émise (D2) qui émet, dans un état mis en service, des impulsions de lumière élargies, de manière décalée dans le temps et en particulier en alternance par rapport aux impulsions de lumière (20) de la première source de lumière (D1), en direction de l'espace de surveillance,
(iii) un agencement d'éléments récepteurs (2) pour la réception, en présence d'un objet (18), de la lumière réfléchie ou réémise (28) par celui-ci, de sorte que l'agencement d'éléments récepteurs (2) inclut une partie de zone proche (4) comprenant au moins un élément récepteur, et une partie de zone lointaine (6) comprenant au moins un élément récepteur, et
(iv) un système d'évaluation (108), qui inclut les éléments suivants :
- une unité de multiplication (170) qui est conçue pour, dans une étape de multiplication, multiplier des signaux provenant d'éléments récepteurs (N1, ..., Nj) de la partie de zone proche (4) ou des signaux dérivés de ceux-ci avec un facteur avec un premier signe, et multiplier des signaux provenant d'éléments récepteurs (F1, ..., Fi) de la partie de zone lointaine (6) ou des signaux dérivés de ceux-ci avec un facteur avec le signe opposé,
- une unité d'addition (172) qui additionne les signaux multipliés,
- une unité de comparaison (178), qui soumet le signal de résultat de comparaison (k) de l'unité de comparaison (176) à un traitement multibit avec une profondeur multibit au moins égale à deux, dont le signal de sortie suit les variations du signal de résultat de comparaison (k) non pas immédiatement, mais uniquement lorsque, après un certain nombre de cycles d'échantillonnage, qui correspond à la profondeur multibit (N), le signal de résultat de comparaison différent est toujours appliqué, et on utilise le signal de sortie du traitement multibit à titre de signal de présence (q) afin de détecter la présence d'un objet (18) dans une zone proche (52) qui est formée par une zone de l'espace de surveillance qui est plus proche du capteur (1) qu'une zone lointaine (54), ou bien pour détecter la présence d'un objet dans une zone lointaine (54) qui est formée par une zone de l'espace de surveillance qui est éloignée plus loin du capteur (1) qu'une zone proche (52), et
- une unité de pondération (164) qui, dans une étape de pondération, pondère des signaux, qui sont reçus par l'agencement d'éléments récepteurs (2) pendant des impulsions de lumière (20) de la première source de lumière émise (D1), avec un premier facteur de pondération, et qui pondère des signaux, qui sont reçus par l'agencement d'éléments récepteurs (2) pendant des impulsions de lumière de la seconde source de lumière émise (D2), avec un second facteur de pondération,
dans lequel le système d'évaluation (108) inclut en outre :
- une unité d'échantillonnage (162) entre l'unité d'addition (172) et l'unité de pondération (164), avec laquelle le signal de somme qui se présente après l'étape d'addition est échantillonné, et l'unité de pondération (164) est agencée entre l'unité d'échantillonnage (162) et l'unité de comparaison (176), et
- une unité d'inversion (184) qui, en cas de modification de la relation entre le signal de présence (q) après le traitement multibit par l'unité de traitement multibit (178), et le signal de résultat de comparaison (k) qui est délivré par l'unité de comparaison (176), modifie l'état de fonctionnement de la seconde source de lumière émise (D2).

8. Capteur optoélectronique (1) selon la revendication 7, **caractérisé en ce que** le système d'évaluation (108) est conçu pour la mise en oeuvre d'un procédé dans lequel l'unité de traitement multibit (178) du système d'évaluation (108) exécute le traitement multibit selon la revendication 2.

9. Capteur optoélectronique (1) selon la revendication 7, **caractérisé en ce qu'**il est conçu pour la mise en oeuvre d'un procédé selon l'une des revendications 1 à 6.
